# EUROPÄISCHE PATENTSCHRIFT

(11) **EP 1 086 609 B1**
(45) Veröffentlichungstag und Bekanntmachung des Hinweises auf die Patenterteilung: **10.03.2004**
(21) Anmeldenummer: 99936308.8
(22) Anmeldetag: 25.05.1999
(51) Int. Cl.: H05B 41/04, H05B 41/231, H05B 41/23, H05B 41/36, H05B 37/00

(54) **ZÜNDER FÜR EINE GASENTLADUNGSLAMPE, INSBESONDERE HOCHDRUCK-GASENTLADUNGSLAMPE FÜR KRAFTFAHRZEUGSCHEINWERFER**
STARTER FOR A GAS DISCHARGE LAMP, ESPECIALLY A HIGH PRESSURE GAS DISCHARGE LAMP FOR AUTOMOBILE HEADLIGHTS
ALLUMEUR POUR LAMPE LUMINESCENTE A GAZ, NOTAMMENT LAMPE LUMINESCENTE A GAZ HAUTE PRESSION POUR PHARE DE VEHICULE AUTOMOBILE

(30) Priorität: 27.05.1998 DE 19823641
(43) Veröffentlichungstag der Anmeldung: 28.03.2001
(73) Patentinhaber: Automotive Lighting Reutlingen GmbH, 72762 Reutlingen (DE)
(72) Erfinder: DECKER, Gerhard, D-77855 Achern (DE)
(74) Vertreter: Dreiss, Fuhlendorf, Steimle & Becker
(86) Internationale Anmeldenummer: PCT/DE1999/001533
(87) Internationale Veröffentlichungsnummer: WO 1999/062304

(56) Entgegenhaltungen:
- US-A- 4 723 096
- US-A- 5 004 960

## Beschreibung

### Stand der Technik

Die Erfindung geht aus von einem Zünder für eine Gasentladungslampe, insbesondere Hochdruck-Gasentladungslampe für Kraftfahrzeugscheinwerfer, gemäß der im Oberbegriff des Anspruchs 1 definierten Gattung.

Bei einer aus der DE-OS 44 23 275 A1 bekannten Zündschaltung dieser Art ist es bekannt, die Zündspannung mit Hilfe einer die Spannung erhöhenden Kaskadenschaltung zu erzeugen, wobei jedoch der Kaskade ein DC/AC-Wandler vorgeschaltet ist. Hier ist ein nicht zu unterschätzender Aufwand für den Zünder zu betreiben.

Weiterhin ist es aus der DE 40 17 415 C2 bekannt, der Primärwicklung eines Zündtransformators in einer Zündvorrichtung eine Spannung zuzuführen. Die Sekundärwicklung dieses Zündtransformators transformiert diese Spannung auf diejenige Spannung hoch, die zum Zünden der Lampe notwendig ist. Auf der Primärseite ist ein Kondensator parallel zu der Reihenschaltung der Primärwicklung und eines steuerbaren Schalters, beispielsweise eines gesteuerten Thyristors angeordnet. Dieser Kondensator wird zum Zünden auf eine zu diesem Zeitpunkt dann anliegende und wirksame Spannung aufgeladen. Bei Erreichen einer bestimmten Spannung wird der steuerbare Schalter durchgeschaltet und der Kondensator entladen. Bei dieser bekannten Zündvorrichtung wird zur Ladung des Kondensators eine über eine separate Spannungsquelle notwendige sehr hohe zusätzliche Spannung benötigt.

Aus der US 9,723,096 ist eine Spannungsversorgung für eine Bogenlampe bekannt, welche einen Spannungsvervielfacher verwendet. Es wird insbesondere ein Zünder für eine Gasentladungslampe offenbart, wobei der Zünder über seine Eingangsklemmen und die Gasentladungslampe über die Sekundärseite eines Übertragers von einer Brückenschaltung mit Brennenergie versorgt werden. Auf der Primärseite des Übertragers wird die notwendige Zündenergie bereit gestellt und für einen Zündvorgang auf die Sekundärseite übertragen. Der Zünder umfasst eine Kaskadenschaltung aus Kondensatoren und Dioden, um die für den Zündvorgang erforderliche Zündspannung an einem Ladekondensator zu erzeugen.

Ausgehend von diesem Stand der Technik ist es die Aufgabe der Erfindung, einen bekannten Zünder für eine Gasentladungslampe derart weiterzubilden, dass die Bereitstellung der notwendigen Zündspannung vereinfacht und preiswerter realisiert werden kann.

Diese Aufgabe wird durch den Gegenstand des Patentanspruchs. 1 gelöst. Demnach wird der beschriebene bekannte Zünder in der Weise betrieben, dass die Brückenschaltung für die Zündung mit einer Frequenz getaktet wird, welche wesentlich höher ist als eine normale Frequenz bei Brennbetrieb und dass die Brückenschaltung nach erfolgter Zündung auf die normale Frequenz bei Brennbetrieb umgeschaltet wird.

### Vorteile der Erfindung

Ein derartig ausgebildeter Zünder für eine Gasentladungslampe hat gegenüber bisher bekannten Zündern den Vorteil, dass die Bereitstellung der notwendigen Zündspannung auf einfache Weise mit sehr preiswerten Bauteilen erreicht wird.

Dadurch, dass der Zünder direkt von der Steuerschaltung bzw. der Brückenschaltung innerhalb der Steuerschaltung mit Energie versorgt wird, wird der Aufbau des Zünders vereinfacht und eine Reduzierung der Zünderinduktivität erreicht. Dies wiederum führt zu einer Verbesserung bzw. Verringerung der Abstrahlung. Die Erfindung ermöglicht darüber hinaus die Integration von Zünder und Steuergerät, wodurch eine weitere Kosten- und Bauraumreduzierung möglich wird.

Durch die in den weiteren Ansprüchen niedergelegten Maßnahmen sind vorteilhafte Weiterbildungen und Verbesserungen des im Anspruch 1 angegebenen Zünders möglich.

Gemäß besonderer zweckmäßiger und vorteilhafter Ausgestaltungen der Erfindung sind prinzipiell drei verschiedene Ausführungen möglich. Zum einen ist dies der sogenannte Zweileiter-Zünder oder der Dreileiter-Zünder oder der Vierleiter-Zünder.

Bei der vorteilhaften Ausgestaltung als Zweileiter-Zünder ist der Zünder mit zwei Leitungen an das Steuergerät angeschlossen. In vorteilhafter Ausgestaltung und zweckmäßiger Weiterbildung dieser Ausführungsform ist in Reihe mit der Primärwicklung des Übertragers ein Schaltelement, insbesondere eine Funkenstrecke, ein Transistor oder ein Thyristor vorgesehen, um den Zündimpuls bei Erreichen der Zündspannung auf der Primärseite des Übertragers zu generieren.

In der besonders zweckmäßigen und vorteilhaften Ausgestaltung des Zünders als Dreileiter-Zünder ist vorgesehen, daß der Zünder über drei Leitungen mit dem Steuergerät verbunden ist, wobei der eine Anschluß der Primärwicklung des Übertragers direkt mit dem Steuergerät und ohne Zwischenschaltung eines Schaltelements verbunden ist, während der andere Anschluß der Primärwicklung an den Ausgang der Kaskade angeschlossen ist. Diese weiterbildung bringt erhöhte Sicherheit und die Möglichkeit, Zünder und Steuergerät zu integrieren.

In weiterer vorteilhafter Ausgestaltung dieser Version des Zünders ist vorgesehen, daß im Steuergerät der eine direkt verbundene Anschluß der Primärwicklung des Übertragers über einen dort vorgesehenen Schalter oder ein dort vorgesehenes Relais elektronisch oder mechanisch mit der Gerätemasse kurzgeschlossen wird, um gesteuert die Zündung einzuleiten.

Bei der vorteilhaften Ausgestaltung und Weiterbildung der Erfindung in der Version als Vierleiter-Zünder ist vorgesehen, daß der Zünder über vier Leitungen mit dem Steuergerät verbunden ist, wobei der eine Anschluß der Primärwicklung des Übertragers über einen steuerbaren Schalter mit der Bezugsmasse des Steuergerätes verbunden ist, ebenso wie der eine Anschluß des Ladekondensators, während der andere Anschluß der Primärwicklung an den Ausgang der Kaskade angeschlossen ist, und wobei die vierte Leitung die Ansteuerleitung für den ansteuerbaren Schalter ist. In zweckmäßiger Ausgestaltung kann vorgesehen sein, daß als steuerbarer Schalter ein Relais oder ein Transistor oder ein Thyristor verwendet wird.

Gemäß einer vorteilhaften Weiterbildung der Erfindung, die alle möglichen Ausführungsversionen, Zweileiter-, Dreileiter- oder Vierleiter-Version betreffen, wird zum Zünden die Brückenschaltung des Steuergeräts mit einer Frequenz von ca. 20 kHz betrieben und nach erfolgter Zündung auf eine Betriebsfrequenz von ca. 400 Hz umgeschaltet.

### Zeichnung

Die Erfindung ist anhand von in der Zeichnung dargestellten Ausführungsbeispielen in der nachfolgenden Beschreibung näher erläutert. Es zeigen:
- Fig. 1: schematisch den erfindungsgemäßen Zünder in einer ersten Version des Zweileiter-Zünders, bei dem die Zündung durch eine Funkenstrecke eingeleitet wird,
- Fig. 2: schematisch ein weiteres Beispiel für den Zweileiter-Zünder, bei dem durch ein steuerbares Schaltelement die Zündung eingeleitet wird,
- Fig. 3: schematisch ein Beispiel eines Dreileiter-Zünders entsprechend der Erfindung,
- Fig. 4: schematisch das Beispiel eines Zünders entsprechend der Erfindung, der über vier Leitungen mit dem Steuergerät verbunden ist, und
- Fig. 5: eine graphische Darstellung, Simulationsplot, welche den Spannungshochlauf und die Zündung bei dem erfindungsgemäßen Zünder darstellt, wobei im oberen Teil der Hochlauf der Kaskadenspannung und im unteren Diagramm in kleinerem Maßstab dieser Hochlauf zusammen mit dem Zündimpuls sichtbar gemacht ist.

### Beschreibung der Ausführungsbeispiele

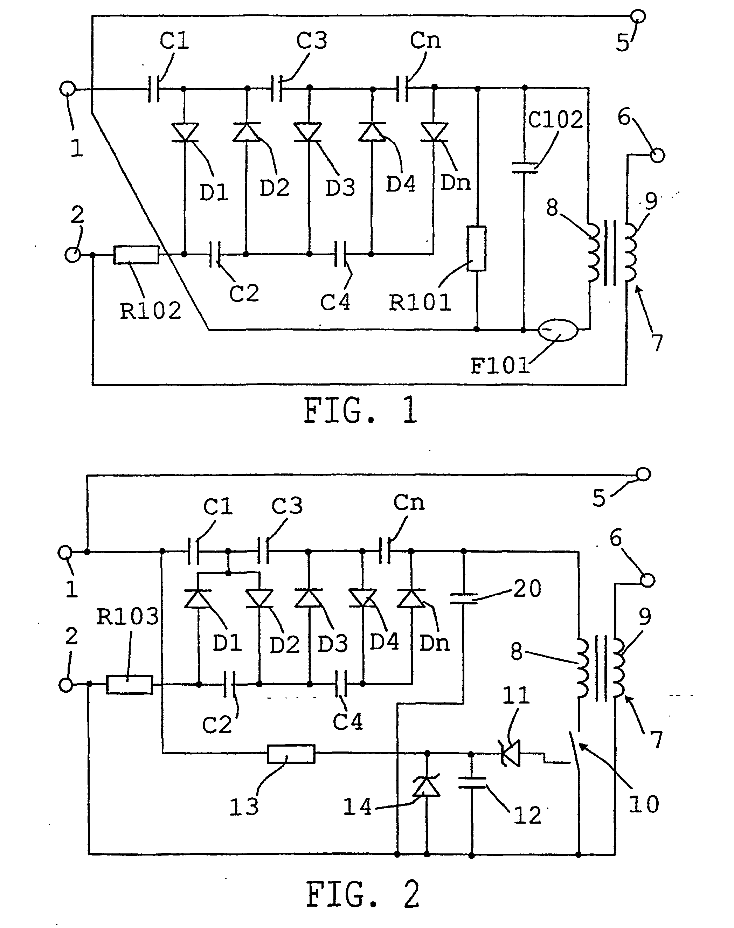

In Fig. 1 ist schematisch das Blockschaltbild eines ersten Ausführungsbeispiels des erfindungsgemäß gestalteten Zünders dargestellt. Dieses Ausführungsbeispiel ist ein sogenannter Zweileiter-Zünder, bei dem der Zünder über zwei Leitungen bzw. Anschlüsse 1 und 2 mit dem Steuergerät verbunden ist. Das Steuergerät ist im einzelnen nicht dargestellt, ebenso nicht die Brückenschaltung, von welcher der Zünder mit Spannung an den Anschlüssen 1 und 2 versorgt wird. An den Eingangsklemmen 1 und 2 der Zündschaltung steht also die Ausgangsspannung der Brückenschaltung als Eingangsspannung zur Verfügung. Dies können beispielsweise 300 V sein. Der Eingang 1 bildet auch gleichzeitig den Ausgang 5 der Zündschaltung und der Ausgang 2 ist über die Sekundärwicklung 9 eines Übertragers 7 auf den zweiten Ausgang 6 der Zündschaltung geführt. An die Ausgänge 5 und 6 ist die nicht dargestellte Gasentladungslampe angeschlossen.

Parallel zur Primärwicklung 8 des Übertragers 7 ist die Reihenschaltung eines Ladekondensators C102 und einer Funkenstrecke F101 geschaltet. Parallel zum Ladekondensator C102 ist ein Entladewiderstand R101 geschaltet. Zur Erzeugung der notwendigen Spannung am Ladekondensator C102 ist diesem eine aus Kondensatoren C1 bis Cn und Dioden D1 bis Dn gebildete Kaskadenschaltung vorgeschaltet. Mit der Kathode der ersten Diode D1 ist ein Ladewiderstand R102 verbunden, dessen anderer Anschluß am Anschluß 2 des Zünders liegt. Die Kaskadenschaltung ist in ihrer Folge nun so gebildet, daß in Reihe mit Kondensator C1 die Anoden-Kathoden-Strecke der ersten Diode D1, der zweite Kondensator C2, die Anoden-Kathoden-Strecke der zweiten Diode D2, der Kondensator C3, die Anoden-Kathoden-Strecke der dritten Diode D3, der vierte Kondensator C4, die Anoden-Kathoden-Strecke der vierten Diode D4, und weiterhin in entsprechender Weise über den nächsten Kondensator Cn und die Anoden-Kathoden-Strecke der Diode Dn angeordnet sind. Am letzten Kondensator Cn angeschlossen ist dann der Ladekondensator C102.

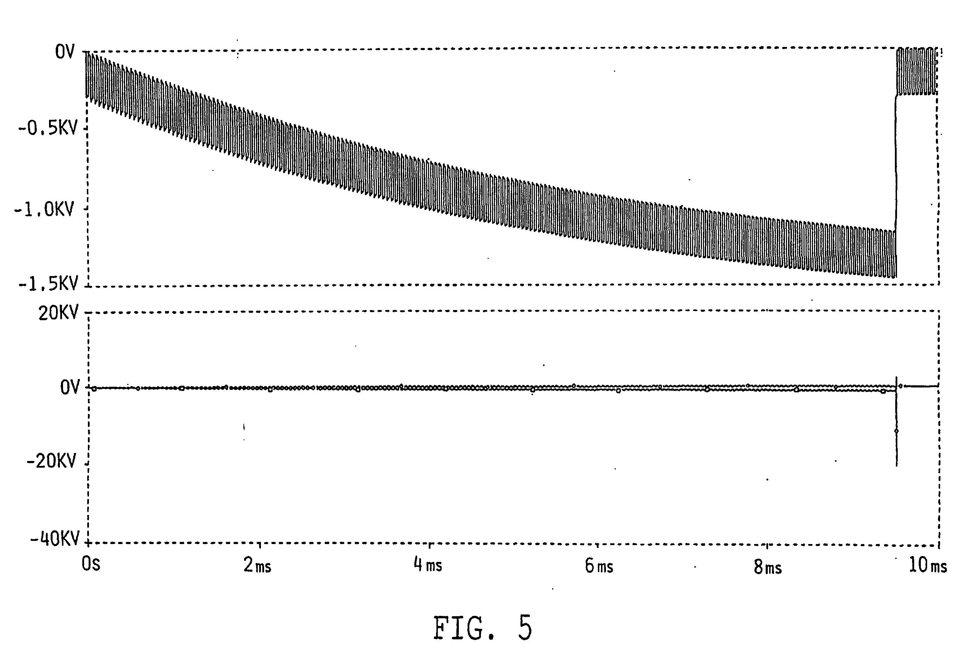

Die für die Zündung notwendige zusätzliche Zündhilfsspannung wird bei vorliegender Erfindung also nicht im Steuergerät erzeugt, sondern wird mit Hilfe der aus den Kondensatoren C1 bis Cn und den Dioden D1 bis Dn gebildeten Kondensator-Dioden-Kaskade im Zünder erzeugt. Der Vorteil besteht auch darin, daß für die Kaskade günstige handelsübliche Dioden und Kondensatoren eingesetzt werden können. Diese Kaskade wird beim Verbinden des Steuergerätes mit dem Zünder, wie dargestellt, direkt an den Ausgang der schon vorhandenen Brückenschaltung angebunden. Durch schnelles Takten der Brückenschaltung wird die zusätzliche Hilfsspannung erzeugt, in Fig. 5 ist dies an Diagrammen näher dargestellt.

Damit die zusätzliche Zündhilfsspannung schnell hochläuft, wird die Brücke statt mit den üblichen 400 Hz mit beispielsweise 20 kHz getaktet. Die Taktfrequenz der Brücke kann durch einfache Programmänderung im Mikrocontroller geändert werden. Nach dem Zünden arbeitet die Brücke wieder im üblichen Anlauf- und Brennbetriebsmodus mit etwa 400 Hz der Betriebsfrequenz. Bei dieser Frequenz wird die Kaskade nur langsam geladen und durch den Einbruch der Brückenspannung, was durch das Zünden der Lampe erfolgt, wird der zum Zünden erforderliche Endwert nicht erreicht, da die Lampe ja bereits brennt.

Die Anstiegszeit und der Endwert der zusätzlichen Zündhilfsspannung sind abhängig von der Brückenspannung, die an den Eingängen 1 und 2 anliegt, der Anzahl der eingesetzten Kaskadenelemente 1 bis n, den Bauteilen selbst, dem Brückentakt, dem Ladewiderstand R102 zur Begrenzung des Spitzenstroms und einem eventuell benötigten Entladewiderstand R101. Mit dem Ladewiderstand R102 wird die Spannungsanstiegszeit des Ladekondensators C102 eingestellt und gleichzeitig wird die Kaskade für den normalen Brennbetrieb stärker entkoppelt.

Mit vorliegender Erfindung wird die Zündhilfsspannung aufgrund der Taktung und der Kaskade bei einer Bauteilanzahl von n = 5 auf z.B. 1 500 V bei einer Brückenspannung von beispielsweise 300 V angehoben. Die Funkenstrecke kann dann beispielsweise auf 1 200 oder einen Wert unterhalb von 1 500 Volt eingestellt werden, um bei Erreichen dieser Spannung die Zündung einzuleiten. Mittels des Übersetzungsverhältnisses des Übertragers 7 wird auf der Sekundärseite 9 eine hochtransformierte Spannung von ausreichender Höhe erzeugt.

Durch das aufgrund der Erfindung mögliche Anheben der Zündhilfsspannung ist es auch möglich, das Übersetzungsverhältnis des Zündübertragers 7 zu ändern, und zwar so, daß mit einem einstufigen Zünder die Serieninduktivität, die durch die Sekundärwicklung 9 gegeben ist, auf einen besonders günstigen Wert von beispielsweise 1 mH zu reduzieren. Weitere Vorteile, die sich neben Verringerung von Kosten und Bauraumeinsparung ergeben, liegen darin, daß der Gesamtwirkungsgrad durch Verringerung der Gesamtverlustleistung gesteigert ist, daß die Zündübernahmesicherheit erhöht ist, daß das EMV-Abstrahlverhalten verbessert wird, daß eine Verringerung der Leerlaufspannung bei Betrieb ohne den Zünder möglich ist, wodurch die Sicherheit gegen gefährliche Spannungen erhöht wird. Außerdem ist es möglich, die Leerlaufspannung in größeren Breiten schwanken zu lassen, so daß hier die Toleranzanforderungen abgesenkt werden können.

In dem Ausführungsbeispiel, das in Fig. 2 dargestellt ist, ist ein weiteres Beispiel für das Zwei-Leiter-Konzept des Zünders dargestellt. Dabei ist anstelle der Funkenstrecke F101 ein MOSFET-Transistor 10 vorgesehen, der über eine Zenerdiode 11 und einen Gateladekondensator 12 bei Erreichen der entsprechenden Spannung gezündet wird. Der Gateladekondensator 12 wird über einen Widerstand 13 geladen und hat parallel eine Zenerdiode 14 zur Spannungsbegrenzung vorgesehen.

Die in Fig. 2 dargestellte Version des Zwei-Leiter-Prinzips für die Realisierung der Erfindung bringt gegenüber der Ausführungsform von Fig. 1 den Vorteil, daß die Zündung kontrollierter eingeleitet werden kann. Dadurch ist eine größere Sicherheit vorhanden, daß die im Steuergerät vorgesehene Brücke im Zündmoment die notwendige Vorzugsrichtung in der Polung aufweist, damit die Lampe sicher übernimmt. Wie auch bei dem Ausführungsbeispiel von Fig. 1 wird beim Ausführungsbeispiel von Fig. 2 der Eingang des Zünders an den Eingängen 1 und 2 mit beispielsweise 20 kHz getaktet. Die Dioden D1 bis Dn sind so gepolt, daß am Ladekondensator 20 für die Zündspannungserzeugung eine positive Spannung gegen die Bezugsmasse entsteht. Solange die Brückenschaltung taktet, wird die Gatespannung ständig umgepolt. Eine Zeitglied aus dem Ladewiderstand 13, der eingangsseitig mit dem Eingang 1 verbunden ist, wird mit dem Ladekondensator 12 so eingestellt, daß die Triggerspannung für den Schalter 10 nicht erreicht wird. Die Zündhilfsspannung erreicht nach der notwendigen Ladezeit den Endwert.

Diese Ladezeit wird ausreichend appliziert und wird im Ansteuerprogramm festgelegt. Nach dieser Zeit wird die Brücke in Vorzugsrichtung gepolt. Damit liegt nun das Bezugspotential des Schalters 10 auf beispielsweise -300 V, d.h. am Eingang 2 liegen die -300 V an. Der andere Pol des Zünders, d.h. der Eingang 1 ist auf Massepotential gelegt und stellt damit den Pluspol für den Zünder dar. Nun wird das Zeitglied mit dem Widerstand 13 und mit dem Ladekondensator 12 auf die Triggerspannung aufgeladen. Die Zündung erfolgt nach kurzer Verzögerungszeit. Als Schaltelemente für den Schalter 10 sind verschiedene Möglichkeiten gegeben, beispielsweise ein Hochvolttransistor, ein Feldeffekttransistor, ein IGBT oder auch ein Thyristor. Vorteilhaft ist auch, daß dadurch die zu bevorzugenden N-Kanal-Typen von Transistoren einsetzbar sind.

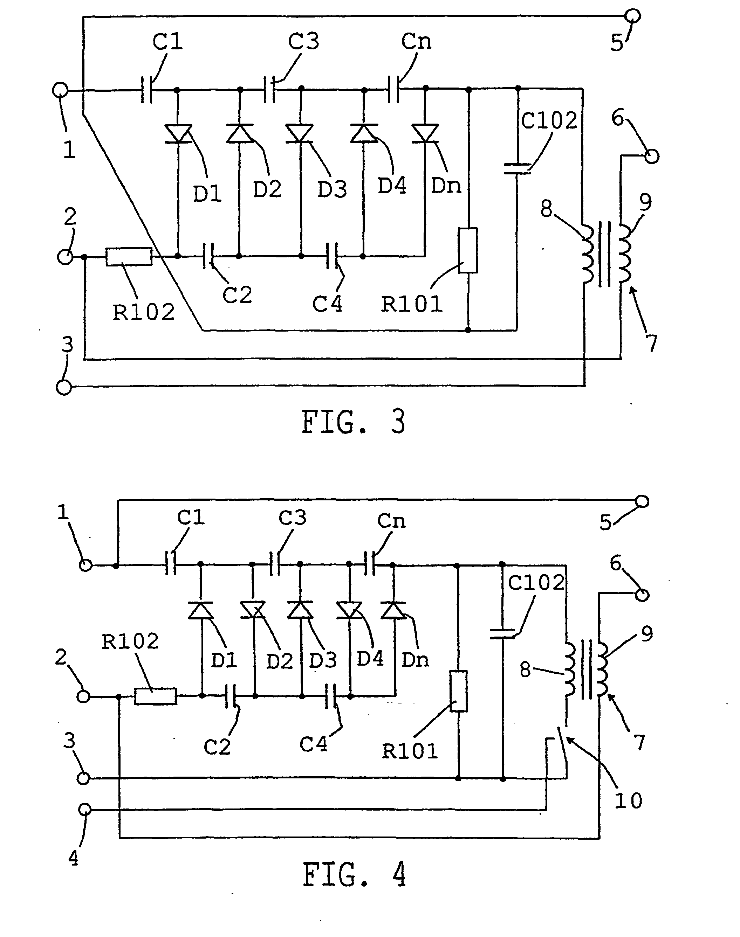

In Fig. 3 ist der erfindungsgemäße Zünder in Form des Drei-Leiter-Konzepts verwirklicht. Dabei ist der Zünder über drei Leitungen 1, 2 und 3 mit dem nicht dargestellten Steuergerät verbunden. Der Anschluß der Primärwicklung 8 des Übertragers 7 ist die dritte Leitung 3 und direkt mit dem Steuergerät ohne Zwischenschaltung eines Schaltelements verbunden. Der andere Anschluß der Primärwicklung 8 des Übertragers 7 ist an den Ausgang der Kaskade, den Verbindungspunkt von Kondensator Cn und Anode der Diode Dn angeschlossen. Im übrigen entspricht diese Schaltung dann der in Fig. 1 dargestellten Schaltung des erfindungsgemäß gestalteten Zünders. Bei dieser Ausführungsform ist in vorteilhafter Ausgestaltung im Steuergerät ein dort vorgesehener Schalter, der mechanisch als Relais oder elektronisch als Transistor ausgebildet sein kann, vorgesehen, um den Anschluß der Primärwicklung 8 direkt mit der Gerätemasse bzw. dem Bezugspotential kurz zu schließen. Dadurch wird die Zündung kontrolliert eingeleitet. Dies hat auch den Vorteil, daß dann, wenn der Zünder nicht mit dem Steuergerät verbunden ist und das Steuergerät an Vorsorgungsspannung, beispielsweise die Spannung einer Kraftfahrzeugbatterie, gelegt ist, keine Spannung an dieser Leitung 3 entsteht. Dies ist ein wesentlicher Gesichtspunkt zur Erhöhung der Sicherheit. Dieses Konzept ist eine gute Grundlage für die Integration von Steuergerät und Zünder.

Anhand der in Fig. 4 dargestellten Ausführungsführungsform wird das Vier-Leiter-Konzept für den erfindungsgemäßen Zünder gezeigt. Die Anordnung der Bauelemente in der Kaskade, auch Ladekondensator C102, Ladewiderstand R102, Entladewiderstand R101 und Übertrager 7 mit Primärwicklung 8 und Sekundärwicklung 9 ist identisch mit der in Fig. 1 dargestellten Anordnung beim Zwei-Leiter-Konzept. Der in Fig. 4 gezeigte Zünder ist über vier Leitungen 1, 2, 3, 4 mit dem Steuergerät verbunden. Dabei ist der eine Anschluß der Primärwicklung 8 des Übertragers 7 über einen steuerbaren Schalter 40 mit der Leitung 3 des Steuergerätes verbunden, die das Bezugspotential des Steuergerätes bzw. die Gerätemasse darstellt. An das Bezugspotential ist auch der eine Anschluß des Ladekondensators C102 sowie der Entladewiderstand R101 angeschlossen. Die Ansteuerleitung des Schalters 40 ist an die vierte Leitung 4 angeschlossen und stellt somit die Ansteuerleitung des steuerbaren Schalters 40 dar. Als steuerbarer Schalter 40 kann ein Relais oder ein Transistor oder ein Thyristor vorgesehen sein.

Der Ladekondensator C102 und die Bezugsmasse des steuerbaren Schalters 40 werden mit der Bezugsmasse des Steuergerätes verbunden. Dies ist auf Leitung 3 der Fall. Die vierte Leitung 4 ist die zusätzliche Steuerleitung für das kontrollierte Einschalten des Schalters 40. Auf diese Weise bleibt der Entladekreis relativ kurz und niederohmig und es gibt keine Leitungen, an denen die höhere Zündhilfsspannung anliegt, was für eine erhöhte Sicherheit sorgt. In dieser Version ist die Integration von Steuergerät und Zünder in besonders vorteilhafter Weise durchzuführen.

In der Fig. 5 ist im oberen Teil ein Diagramm gezeigt, welches in einem Simulationsplot den Spannungshochlauf an der Dioden-Kondensator-Kaskade zeigt, und zwar ausgehend von der Spannung bei 0 V bis zu etwa -1,5 kv bis zu dem Zeitpunkt, zu dem die Zündung erfolgt. Im unteren Teil ist im größeren Maßstab derselbe Verlauf dargestellt, wobei der in etwa 20 kV betragende Zündimpuls in seiner ganzen Größe aufgrund des Maßstabes besser zu erkennen ist, während die Spannungsvergrößerung beim Hochlauf bis zur Zündspannung maßstabsgemäß sehr viel niedriger ausfällt. Die Zündung ist nach knapp 10 Millisekunden Hochlaufzeit zu erreichen. Gut erkennbar ist im oberen Teil des Diagramms die relativ große Frequenz, mit der die Brücke getaktet wird und dementsprechend der Spannungsverlauf sich allmählich, aber doch in durchaus vertretbar kurzer Zeit, bis zum Zündwert hochschaukelt.

Die insgesamt mit der Erfindung erzielten Vorteile, egal ob im Zwei-Leiter-Konzept, im Drei-Leiter-Konzept oder im Vier-Leiter-Konzept realisiert, liegen insbesondere darin, daß Kosten und Bauteile sowie Bauraum eingespart werden. Es ist eine Steigerung des Gesamtwirkungsgrades bzw. eine Verringerung der Gesamtverlustleistung bei Steigerung der Zündübernahmesicherheit zu erzielen. Das EMV-Abstrahlverhalten wird verbessert und die Leerlaufspannung beim Betrieb ohne Zünder läßt sich verringern, was eine höhere Sicherheit gegen gefährliche Spannungen mit sich bringt. Darüber hinaus kann die Toleranz der Leerlaufspannung erweitert werden, und die Zündung kann durch eine einfache Funktion in der Software kontrollierbarer gesteuert werden. Insgesamt ermöglicht die Erfindung die Integration von Zünder und Steuergerät, wodurch nochmals eine weitere Kosten- und Bauraumreduzierung zu erzielen ist.

## Patentansprüche

1. Zünder für eine Gasentladungslampe, insbesondere eine Hochdruck-Gasentladungslampe für Kraftfahrzeuge, wobei eine Zündschaltung direkt und die Gaseentladungslampe über die Sekundärseite (9) eines Übertragers (7) von einer Brückenschaltung mit Brennenergie versorgt werden; wobei auf der Primärseite des Übertragers (7) die notwendige Zündenergie bereitgestellt und auf die Sekundärseite (8) übertragen wird; und
wobei in der Zündschaltung eine Zündspannung an einem Ladekondensator (C102) mittels einer Kaskadenschaltung aus Kondensatoren (C1-Cn) und Dioden (D1-Dn) erzeugt wird;
**dadurch gekennzeichnet, dass**
die Brückenschaltung für die Zündung mit einer Frequenz getaktet wird, welche wesentlich höher ist als eine normale Frequenz bei Brennbetrieb; und
die Brückenschaltung nach erfolgter Zündung auf die normale Frequenz bei Brennbetrieb umgestellt wird.

2. Zünder nach Anspruch 1, **dadurch gekennzeichnet, daß** in Reihe mit der Primärwicklung (8) des Übertragers (7) ein Schaltelement, insbesondere eine Funkenstrecke (F101), ein Transistor (10) oder ein Thyristor vorgesehen ist, um den zündimpuls bei Erreichen der Zündspannung auf der Primarseite des Übertragers (7) zu generieren.

3. Zünder nach Anspruch 1 oder 2, **dadurch gekennzeichnet, daß** der Zünder mit zwei Leitungen (1, 2) an das Steuergerät angeschlossen ist.

4. Zünder nach Anspruch 1, **dadurch gekennzeichnet, daß** der Zünder über drei Leitungen (1, 2, 3) mit dem Steuergerät verbunden ist, wobei der eine Anschluß (3) der Primärwicklung (8) des Übertragers (7) direkt mit dem Steuergerät und ohne Zwischenschaltung eines Schaltelements verbunden ist, während der andere Anschluß der Primärwicklung (8) an den Ausgang der Kaskade angeschlossen ist.

5. Zünder nach Anspruch 4, **dadurch gekennzeichnet, daß** im Steuergerät der eine direkt verbundene Anschluß (3) der Primärwicklung (8) des Übertragers (7) über einen dort vorgesehenen Schalter oder ein dort vorgesehenes Relais elektronisch oder mechanisch mit der Gerätemasse kurzgeschlossen wird, um gesteuert die Zündung einzuleiten.

6. Zünder nach Anspruch 1, **dadurch gekennzeichnet, daß** der Zünder über vier Leitungen (1, 2, 3, 4) mit dem Steuergerät verbunden ist, wobei der eine Anschluß der Primärwicklung (8) des Übertragers (7) über einen steuerbaren Schalter (40) mit der Bezugsmasse (3) des Steuergerätes verbunden ist, ebenso wie der eine Anschluß des Ladekondensators (C102), während der andere Anschluß der Primärwicklung an den Ausgang der Kaskade angeschlossen ist, und wobei die vierte Leitung (4) die Ansteuerleitung für den ansteuerbaren Schalter (40) ist.

7. Zünder nach Anspruch 6, **dadurch gekennzeichnet, daß** als steuerbarer Schalter ein Relais oder ein Transistor oder ein Thyristor vorgesehen ist.

8. Zünder nach Anspruch 1 oder einem der Ansprüche 2 bis 7, **dadurch gekennzeichnet, daß** zum Zünden die Brückenschaltung des Steuergeräts mit einer Frequenz von ca. 20 kHz betrieben wird und nach erfolgter Zündung auf eine Betriebsfrequenz von ca. 400 Hz umgeschaltet wird.

## Claims

1. Igniter for a gas discharge lamp, particularly a high pressure gas discharge lamp for automobiles where an ignition circuit is directly supplied with combustion energy and the gas discharge lamp is supplied with combustion energy by way of the secondary side (9) of a transformer (7) from a bridge circuit; where the necessary ignition energy is made available on the primary side of the transformer (7) and is transferred to the secondary side (8); and where, in the ignition circuit, an ignition voltage is generated on a charge capacitor (C102) by means of a cascade circuit consisting of capacitors (C1-Cn) and diodes (D1-Dn); **characterised in that**
the bridge circuit for the ignition is pulsed with a frequency which is substantially higher than a normal frequency at combustion operation; and
the bridge circuit is changed over to the normal frequency at combustion operation after the ignition has taken place.

2. Igniter according to Claim 1, **characterised in that**, in series with the primary winding (8) of the transformer (7), a circuit element, in particular a spark gap (F101), a transistor (10) or a thyristor is envisaged for the purpose of generating the ignition impulse upon reaching the ignition voltage on the primary side of the transformer (7).

3. Igniter according to Claim 1 or 2, **characterised in that** the igniter is connected to the control device with two lines (1, 2).

4. Igniter according to Claim 1, **characterised in that** the igniter is connected with the control device by way of three lines (1, 2 3), where the one connection (3) of the primary winding (8) of the transformer (7) is directly connected with the control device and without interposition of a circuit element, while the other connection of the primary winding (8) is connected to the outlet of the cascade.

5. Igniter according to Claim 4, **characterised in that**, in the control device, the one directly connected connection (3) of the primary winding (8) of the transformer (7) is electronically or mechanically short-circuited with the equipment mass by way of an envisaged switch at that location or an envisaged relay at that location, in order to initiate the ignition in a controlled manner.

6. Igniter according to Claim 1, **characterised in that** the igniter is connected with the control device by way of four lines (1, 2, 3, 4), where the one connection of the primary winding (8) of the transformer (7) is connected by way of a controllable switch (40) with the reference mass (3) of the control device, as also the one connection of the charge capacitor (C102), while the other connection of the primary winding is connected to the outlet of the cascade, and where the fourth line (4) is the activating line for the activating switch (40).

7. Igniter according to Claim 6, **characterised in that** a relay or a transistor or a thyristor is envisaged as a controllable switch.

8. Igniter according to Claim 1 or one of the Claims 2 to 7, **characterised in that**, for the purpose of ignition, the bridge circuit of the control device is operated with a frequency of approx. 20 kHz and, after the ignition has taken place, is changed over to an operating frequency of approx. 400 Hz.

## Revendications

1. Allumeur pour une lampe luminescente à gaz, notamment une lampe luminescente à gaz haute pression pour des véhicules automobiles, moyennant quoi un circuit d'allumage est directement alimenté en énergie de combustion, et la lampe luminescente à gaz est alimentée en énergie de combustion par l'intermédiaire du côté secondaire (9) d'un transformateur (7) par un montage en pont ; moyennant quoi l'énergie d'allumage nécessaire est fournie au niveau du côté primaire du transformateur (7) et transmise au côté secondaire (8) ; et, moyennant quoi, dans le circuit d'allumage, une tension d'allumage est produite au niveau d'un condensateur de lissage (C102) à l'aide d'un montage en cascade constitué de condensateurs (C1 à Cn) et de diodes (D1 à Dn) ; **caractérisé en ce que** le montage en pont, pour l'allumage, est synchronisé à une fréquence qui est nettement supérieure à une fréquence normale pour l'activité de combustion ; et le montage en pont, une fois l'allumage terminé, revient à la fréquence normale lors d'une activité de combustion.

2. Allumeur selon la revendication 1, **caractérisé en ce qu'**il est prévu, en série avec l'enroulement primaire (8) du transformateur (7), un élément de circuit, en particulier un éclateur à étincelle (F101), un transistor (10) ou un thyristor, afin de générer l'impulsion d'allumage lorsqu'on atteint la tension d'allumage du côté primaire du transformateur (7).

3. Allumeur selon l'une quelconque des revendications 1 ou 2, **caractérisé en ce que** l'allumeur est connecté à l'appareil de commande avec deux lignes (1, 2).

4. Allumeur selon la revendication 1, **caractérisé en ce que** l'allumeur est connecté à l'appareil de commande par l'intermédiaire de trois lignes (1, 2, 3), moyennant quoi l'une des bornes (3) de l'enroulement primaire (8) du transformateur (7) est connectée directement et sans branchement intermédiaire d'un élément de circuit à l'appareil de commande, alors que l'autre borne de l'enroulement primaire (8) est connectée à la sortie de la cascade.

5. Allumeur selon la revendication 4, **caractérisé en ce que**, dans l'appareil de commande, l'une des bornes (3) connectée directement de l'enroulement primaire (8) du transformateur (7) doit être mise en court-circuit par voie électronique avec la masse de l'appareil par l'intermédiaire d'un interrupteur prévu à cet endroit ou d'un relais prévu à cet endroit, afin de déclencher l'allumage de manière réglée.

6. Allumeur selon la revendication 1, **caractérisé en ce que** l'allumeur est connecté à l'appareil de commande par l'intermédiaire de quatre lignes (1, 2, 3, 4), moyennant quoi l'une des bornes de l'enroulement primaire (8) du transformateur (7) est connectée à la masse de référence (3) de l'appareil de commande par l'intermédiaire d'un interrupteur réglable (40), tout comme l'une des bornes du condensateur de lissage (C102), tandis que l'autre borne de l'enroulement primaire est reliée à la sortie de la cascade, et moyennant quoi la quatrième ligne (4) est la ligne d'amorçage pour l'interrupteur (40) amorçable.

7. Allumeur selon la revendication 6, **caractérisé en ce que**, comme interrupteur réglable, on prévoit un relais ou un transistor ou un thyristor.

8. Allumeur selon la revendication 1 ou l'une quelconque des revendications 2 à 7, **caractérisé en ce que**, pour l'allumage, le montage en pont de l'appareil de commande est actionné à une fréquence d'environ 20 kHz, et une fois que l'allumage est réalisé, on passe à une fréquence de fonctionnement d'environ 400 Hz.
